# EUROPÄISCHE PATENTSCHRIFT

(11) **EP 1 035 175 B1**
(45) Veröffentlichungstag und Bekanntmachung des Hinweises auf die Patenterteilung: **19.02.2003**
(21) Anmeldenummer: 00104495.7
(22) Anmeldetag: 09.03.2000
(51) Int. Cl.: C09D 5/34, C09D 5/02, C08K 9/12, C04B 24/12, C08L 79/02, C09D 157/00

(54) **Fällungsmittelkonzentrat, geeignet zur Herstellung schnelltrocknender wässriger Putz- und Beschichtungsmassen, sowie diese Massen**
Flocculation concentrate useful for the preparation of fast-drying aqueous plaster- and coating compositions, and such compositions
Concentrat de coagulation utilisable pour le préparation de masses aqueuses de platre et de revêtement de séchage rapide et ces masses

(30) Priorität: 10.03.1999 DE 19910602
(43) Veröffentlichungstag der Anmeldung: 13.09.2000
(73) Patentinhaber: Wacker-Chemie GmbH, 81737 München (DE)
(72) Erfinder: Weitzel, Hans-Peter, Dr., 84571 Reischach (DE); Zeh, Harald, Dr., 84489 Burghausen (DE); Ball, Peter, Dr., 84547 Emmerting (DE); Marquardt, Klaus, Dr., 83358 Seebruck (DE)
(74) Vertreter: Schuderer, Michael, Dr.

(56) Entgegenhaltungen:
- EP-A- 0 414 752
- EP-A- 0 441 037
- EP-A- 0 632 096
- EP-A- 0 661 306
- EP-A- 0 721 004
- EP-A- 0 811 663
- EP-A- 0 832 949
- EP-A- 0 894 821
- EP-A- 0 894 822
- EP-A- 0 896 029
- EP-A- 0 919 579
- WO-A-99/14275
- DE-A- 4 426 236
- DE-A- 19 711 741
- DE-A- 19 732 774
- FR-A- 1 082 926
- FR-A- 2 165 881
- FR-A- 2 324 699
- US-A- 3 799 902
- US-A- 4 214 039
- US-A- 4 569 694
- A.L.RUTHERFORD: "speciality carbonates for water-borne coatings" ADDITIVES FOR WATER-BASED COATINGS- PROC. SYMP. RSC, ED. D.R.KARSA, 28. - 29. September 1988, Seiten 266-276, XP002135571 London uk
- PATENT ABSTRACTS OF JAPAN vol. 010, no. 377 (C-392), 16. Dezember 1986 (1986-12-16) & JP 61 168681 A (HOECHST GOSEI KK), 30. Juli 1986 (1986-07-30)
- AN 95-252331/33: PLASDOC - CENTRAL PATENTS INDEX - BASIC ABSTRACTS JOURNAL, SECTION A., Bd. 95, Nr. 33, XP002145261 DERWENT PUBLICATIONS LTD. LONDON., GB & JP 07 157565 A (HOECHST GOSEI KK) 20. Juni 1995 (1995-06-20)

## Beschreibung

Die Erfindung betrifft schnell trocknende Putz- und Beschichtungsmassen sowie ein Konzentrat zur Herstellung derartiger Massen.

Übliche Beschichtungsmassen trocknen gerade in der Übergangsjahreszeit Herbst und im Winter nur sehr langsam aus, so daß eine Weiterverarbeitung unter Umständen deutlich verzögert werden kann. Im Stand der Technik sind Lösungen dieser Problematik beschrieben, bei denen Beschichtungsmassen eingesetzt werden, die oberflächlich eine schnelle Verfilmung bewirken, die es erlaubt die nächste Schicht Putz bereits frühzeitig aufzutragen.

In der EP-A 866102 werden schnell trocknende Beschichtungsmassen auf Basis einer wäßrigen Kunststoffdispersion beschrieben, welche noch einen den Gefrierpunkt erniedrigenden Salzgehalt und chemische Vernetzer, gegebenenfalls in Kombination mit UV-Vernetzer, enthält.

Die EP-A 200249 beschreibt eine Methode zur Herstellung von schnell trocknenden Straßenmarkierungsfarben, bei welcher eine wäßrige Kunststoffdispersionsfarbe mit hohem Füllstoffgehalt auf die Straße aufgetragen wird und anschließend Salz aufgestreut wird.

Aus den europäischen Patentanmeldungen EP-A 811663, EP-A 798350, EP-A 409459 sind schnelltrocknende Farben zur Straßenmarkierung bekannt, welche eine wäßrige Kunststoffdispersion und aminfunktionelle Copolymere enthalten.

Nachteilig bei den Lösungswegen aus dem Stand der Technik ist, daß entweder aufwendige Rezepturen verwendet werden müssen oder sehr spezielle Agentien zum Einsatz kommen.

Aufgabe war es daher, eine Beschichtungsmasse zu entwickeln, die schnell abtrocknet und somit frühzeitig überarbeitbar wird, wobei die Rezeptur möglichst anwenderfreundlich und unkompliziert sein soll.

Gegenstand der US-A 4,293,476 sind Bindemittel unter anderem für Beschichtungsmittel, welche rasch vernetzende Filme mit hoher mechanischer Festigkeit bilden. Die Bindemittel bestehen aus Kern-Schale-Teilchen mit einem wasserunlöslichen Polymerkern und einer Polymerhülle mit einer hohen Konzentration von reaktiven Gruppen, sowie einem coreaktiven Vernetzer. Als coreaktiver Vernetzer werden insbesondere aminofunktionelle Verbindungen eingesetzt, beispielsweise Polyethylenimin, welche mit den reaktiven Gruppen, insbesondere nichtionisierbare Halogengruppen, kovalente Bindungen ausbilden. Die Schrift enthält keine Hinweis darauf, wie die Trocknung von Beschichtungsmassen auf Basis herkömmlicher Polymerbinder mit homogener Partikel-Morphologie beschleunigt werden kann.

Die FR-A 2324699 beschreibt fäulnisverhindernde Beschichtungsmittel für Wasserfahrzeuge und Unterwasserbauteile, welche keine toxischen, antimikrobiellen Zusätze enthalten. Das Beschichtungsmittel enthält vier essentielle Komponenten: Ein carboxyliertes Acrylatpolymer, ein Vernetzungsmittel auf Basis von Formaldehydkondensationsharzen oder Epoxidverbindungen oder Salzen von mehrwertigen Metallen, eine Polyethyleniminverbindung sowie einen Ultraviolettabsorber.

Die EP-A 894822 betrifft vernetzbare, in Wasser redispergierbare Polymerpulver. Die Aufgabe bestand darin gegenüber vorbekannten, vernetzbaren Redispersionspulvern solche mit verbesserter Lagerstabilität zur Verfügung zu stellen. Die Aufgabe wurde mit einer redispergierbaren Pulverzusammensetzung gelöst, welche ein wasserunlösliches, filmbildendes Polymerisat mit vernetzbaren Substituenten aus der Gruppe der Aldehyd-, Keto-, Epoxid-, Isocyanat-, Carbonsäureanhydrid- und Aziridin-Substituenten enthält, und damit reagierende Vernetzermoleküle aus der Reihe der Amine, Hydrazide, Hydroxylaminester, Hydrazine und Hydrazone enthält. Die Beschleunigung der Trocknung von Beschichtungsmitteln wird nicht behandelt.

Gegenstand der Erfindung ist eine schnell trocknende Putz- und Beschichtungsmasse ohne UV-Absorber enthaltend ein Bindemittel in Form einer wäßrigen Polymerdispersion oder eines in Wasser redispergierbaren Polymerpulvers, jeweils mit homogen aufgebauten Polymerpartikeln, sowie 0.01 bis 1 Gew.-%, bezogen auf das Gesamtgewicht der Beschichtungsmasse, eines organisches Fällungsmittel aus der Gruppe der Polyethylenimine, oder der niedermolekularen Di-, Tri- oder Tetraamine mit einem Molekulargewicht < 200, gegebenenfalls in Kombination mit einem anorganischen Fällungsmittel.

Als Bindemittel können alle gängigen wäßrigen Polymerdispersionen oder in Wasser redispergierbaren Polymerpulver aller üblichen Harztypen eingesetzt werden, wobei redispergierbar bedeutet, daß die nach der Trocknung erhaltenen Agglomerate bei Zugabe in Wasser wieder in die Primärteilchen zerfallen, welche dann im Wasser dispergiert werden. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide. Es können auch Gemische der genannten Polymere eingesetzt werden.

Bevorzugte Vinylester sind Vinylacetat, Vinylpropionat, Vinylbutyrat, Vinyl-2-Ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R}, VeoVa9^{R} , VeoVa10^{R} oder VeoVa11^{R}. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Bevorzugt werden Polymerisate, welche noch 0.1 bis 8 Gew.-%, bezogen auf das Gesamtgewicht des Polymerisats, von einem oder mehreren ethylenisch ungesättigten, carboxylgruppenhaltigen Monomeren enthalten. Geeignete ethylenisch ungesättigte, carboxylgruppenhaltige Monomere sind ethylenisch ungesättigte Mono- oder Dicarbonsäuren wie Acrylsäure, Methacrylsäure, Maleinsäure, Fumarsäure, Itaconsäure. Vorzugsweise beträgt der Gehalt an carboxylgruppenhaltigen Comonomereinheiten 0.3 bis 4 Gew.-%, bezogen auf das Gesamtgewicht des Mischpolymerisats.

Gegebenenfalls können die Polymerisate noch 0.01 bis 10.0 Gew.-%, bezogen auf das Gesamtgewicht des Mischpolymerisats, Hilfsmonomere aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether enthalten.

Als Polymerisate werden die nachstehend aufgeführten besonders bevorzugt, wobei sich die Angaben in Gewichtsprozent, gegebenenfalls mit dem Anteil an carboxylgruppenhaltigen Comonomereinheiten, auf 100 Gew.-% aufaddieren:
Aus der Gruppe der Vinylester-Polymerisate Vinylacetat-Polymerisate, Vinylacetat-Ethylen-Copolymere mit einem Ethylengehalt von 1 bis 60 Gew.-%; Vinylester-Ethylen-Vinylchlorid-Copolymere mit einem Ethylengehalt von 1 bis 40 Gew.-% und einem Vinylchlorid-Gehalt von 20 bis 90 Gew.-%; VinylacetatCopolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.

Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat, Copolymerisate von Methylmethacrylat mit 1,3-Butadien.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.

Die Herstellung der Polymerisate erfolgt in an sich bekannter Weise, vorzugsweise nach dem Emulsionspolymerisationsverfahren, wie beispielsweise in der WO-A 94/20661 beschrieben, deren diesbezügliche Offenbarung Teil der vorliegenden Anmeldung sein soll. Es können sowohl mit Emulgator stabilisierte Dispersionen eingesetzt werden, als auch mit Schutzkolloid stabilisierte. Bevorzugt werden schutzkolloidfreie Polymerisate. Zur Herstellung der Pulver wird die dadurch erhältliche Polymerdispersion getrocknet. Die Trocknung kann mittels Sprühtrocknung, Gefriertrocknung oder durch Koagulation der Dispersion und anschließender Wirbelschichttrocknung erfolgen. Bevorzugt wird die Sprühtrocknung.

Im allgemeinen wird das Bindemittel in Form einer wäßrigen Polymerdispersion oder eines in Wasser redispergierbaren Polymerpulvers in einer Menge von 5 bis 15 Gew.-% , bevorzugt 0.1 bis 8 Gew.-%, jeweils Polymeranteil bezogen auf Beschichtungsmasse, eingesetzt.

Als organisches Fällungsmittel geeignet sind Polymere aus der Gruppe der Polyethylenimine oder niedermolekulare Di-, Tri- oder Tetraamine mit einem Molekulargewicht von im allgemeinen bis 200. Geeignete niedermolekulare Di-, Tri- und Tetraamine sind Hexamethylendiamin, Diaminotetramethylcyclohexan, 1,3-Bisaminomethylbenzol, Diethylentriamin, Triethylentriamin, Tetraethylentetramin. Bevorzugt werden Polyethylenimine, besonders bevorzugt mit einem mittleren Molekulargewicht Mw von 1·10⁵ bis 2·10⁶, insbesondere solche mit einem mittleren Molekulargewicht Mw von 7.5·10⁵ bis 1.2·10⁶, am meisten bevorzugt mit einer Brookfield-Viskosität (20°C, 30 % Festgehalt) von 150 bis 350 mPas (Brookfield RVT, ISO 2225, 20 °C, 20 Upm, Spindel 5). Im allgemeinen werden 0.01 bis 1 Gew.-%, bevorzugt 0.01 bis 0.5, besonders bevorzugt 0.015 bis 0.1 Gew.-% organisches Fällungsmittel, bezogen auf das Gesamtgewicht der Beschichtungsmasse, eingesetzt.

Das organische Fällungsmittel kann gegebenenfalls in Kombination mit einem anorganischen Fällungsmittel eingesetzt werden. Als anorganisches Fällungsmittel geeignet sind wasserlösliche, farblose Salze von mehrwertigen, im allgemeinen zwei- bis vierwertigen, Metallionen, wobei wasserlöslich bedeutet, daß die Löslichkeit in Wasser bei Normalbedingungen (23°C, DIN 50014) mindestens 10 g/l beträgt, und mit der Maßgabe, daß die Metallsalze durch Bildung von Ammoniumkomplexen desaktiviert werden können und die koagulierende Wirkung deshalb erst nach Ausdampfen des Ammoniaks zur Wirkung kommt. Es können auch Gemische verschiedener anorganischer Fällungsmittel der oben genannten Art enthalten sein. Bevorzugt werden Metallsalze von Metallen der 2. und 3. Hauptgruppe und der 2. und 4. Nebengruppe des PSE, besonders bevorzugt Salze von Al³⁺, Ti⁴⁺, Zr²⁺, Zn²⁺, am meistem bevorzugt werden Zn²⁺-Salze. Als Gegenionen geeignet sind Anionen von anorganischen und organischen Säuren wie Halogenide beispielsweise Chlorid, Carbonat, Sulfat, Phosphat, Acetat. Bevorzugt werden bauphysikalisch unbedenkliche Anionen wie Carbonat oder Acetat.

Am meisten bevorzugt werden Zinkacetat und Zinkcarbonat. Das anorganische Fällungsmittel wird in einer Menge von 0.05 bis 0.4 Gew.-%, bevorzugt 0.1 bis 0.3 Gew.-%, bezogen auf das Gesamtgewicht der Beschichtungsmasse, eingesetzt. Zn-Salze haben auch noch den Vorteil einer zusätzlichen biociden Wirkung, die dazu beiträgt biologische Schäden am fertigen Produkt (Putz) zu vermeiden.

Neben dem polymeren Bindemittel und dem Fällungsmittel enthalten die Putz- und Beschichtungsmassen noch die üblichen Rezepturbestandteile wie Füllstoffe, Verdickungsmittel, Wasser sowie weitere Zusatzstoffe aus der Gruppe umfassend Pigmente, Dispergiermittel, Entschäumer und Konservierungsmittel. Beispiele für geeignete Füllstoffe sind Sand, Calciumcarbonat, Talkum oder Faserfüllstoffe. Als Verdickungsmittel werden im allgemeinen Celluloseether, Schichtsilikate und Polyacrylate eingesetzt.

Art und Menge der Rezepturbestandteile von Beschichtungsmassen sind dem Fachmann bekannt. Im allgemeinen enthalten die Beschichtungsmassen neben dem Polymerisat und Fällungsmittel noch 25 bis 83 Gew.-% Füllstoff, 0.05 bis 1 Gew.-% Verdickungsmittel, 1 bis 10 Gew.-% Pigment, gegebenenfalls 10 bis 50 Gew.-% Wasser, je nachdem ob pastöser Putz oder Trockenputz, und weitere Hilfsmittel, wobei sich die Anteile in Gew.-% sich in den Rezepturen jeweils auf 100 Gew.-% aufaddieren. Gegebenenfalls, etwa bei dem Einsatz eines anorganischen Fällungsmittels, werden die Beschichtungs- und Putzmassen, vor deren Verarbeitung noch auf einen alkalischen pH-Wert, vorzugsweise von > 8 eingestellt. Dazu werden flüchtige Stickstoffbasen, bevorzugt Ammoniak, besonders bevorzugt Ammoniak in wäßriger Lösung (im allgemeinen 5 bis 30 %-ige Lösungen), zugegeben.

Zur Herstellung von schnell trocknenden, pastösen Beschichtungsmassen können das Fällungsmittel und das polymere Bindemittel in Form dessen wäßriger Dispersion oder Redispersionspulver zusammen mit den weiteren Rezepturbestandteilen abgemischt werden. Zur Abmischung der Beschichtungsmasse werden die weiteren Rezepturbestandteile wie Füllstoffe, Verdickungsmittel, Wasser und die weiteren Zuschläge in geeigneten Mischern gemischt und homogenisiert.

Es ist aber auch möglich die schnell trocknenden Beschichtungsmassen erst vor Ort, an der Baustelle, herzustellen, indem Fällungsmittel erst zu diesem Zeitpunkt der fertigen Rezeptur zugesetzt wird; dadurch wird die größtmögliche Flexibilität erreicht.

Dazu kann das Fällungsmittel in Form eines wäßrigen oder pulverförmigen Konzentrats zugesetzt werden. Das wäßrige Konzentrat enthält 30 bis 60 Gew.-% organisches Fällungsmittel, 10 bis 40 Gew.-% wäßrige Ammoniaklösung und 0 bis 60 Gew.-% anorganisches Fällungsmittel, jeweils bezogen auf das Gesamtgewicht des Konzentrats bezogen. Das wäßrige Konzentrat eignet sich insbesondere zur Herstellung von pastösen Putz- und Beschichtungsmassen.

Das Fällungsmittel wird bevorzugt in Pulverform, als pulverförmiges Konzentrat, zugegeben. Dazu können das organische Fällungsmittel und gegebenenfalls das anorganische Fällungsmittel gemäß der Vorgehensweise aus der EP-A 765899 auf ein pulverförmiges Trägermaterial aufgetragen werden. Geeignete Trägermaterialien sind anorganische und organische Feststoffe, deren mittlere Teilchengröße im allgemeinen 5 nm bis 100 µm beträgt. Beispiele für anorganische Trägermaterialien sind die Oxide von Silicium, Aluminium und Titan, vorzugsweise Titandioxide und Aluminiumsilikate sowie Siliciumdioxide wie Kieselgele und Kieselsäuren, insbesondere hochdisperse Kieselsäuren, am meisten bevorzugt hochdisperse Kieselsäuren mit einer BET-Oberfläche von 100 bis 400 m²/g (DIN 66131). Beispiele für organische Trägermaterialien sind Stärke- und Cellulosepulver, Siliconharze und Additionspolymere wie Polyvinylalkohol- und Polystyrol-Pulver, vorzugsweise Polyvinylalkohole mit einem Hydrolysegrad von 65 bis 95 Mol-% und einer Höppler-Viskosität von 2 bis 15 mPas (4 %-ige wässrige Lösung, DIN 53015 bei 20°C). Am meisten bevorzugt werden pulverförmige Konzentrate, welche Polyethylenimin auf einem anorganischen Träger wie Kieselsäurepulver und/oder Polyvinylalkohol-Pulver enthalten. Das pulverförmige Konzentrat enthält 10 bis 90 Gew.-%, vorzugsweise 20 bis 70 Gew.-% organisches Fällungsmittel und ggf. 0 bis 60 Gew.-% anorganisches Fällungsmittel, bezogen auf das Gesamtgewicht von Fällungsmittel und Träger.

Zur Herstellung der pulverförmigen Konzentrate wird im allgemeinen so vorgegangen, daß das Trägerpulver in der wäßrigen Lösung des organischen Fällungsmittels oder im organischen Fällungsmittel selbst, und gegebenenfalls in der wäßrigen Lösung des anorganischen Fällungsmittels, suspendiert wird und anschließend getrocknet wird. Trägerpulver und Fällungsmittel werden dabei in solchen Mengenverhältnissen eingesetzt, daß der Gehalt an Fällungsmittel im obengenannten Bereich liegt.

Das pulverförmige Konzentrat kann in dieser Form dem Trockenputz zugemischt werden. Zur Herstellung von zementfreien Trockenputzen oder pulverförmigen Kunstharzputzen wird das polymere Bindemittel in Form eines in Wasser redispergierbaren Dispersionspulvers mit den weiteren Rezepturbestandteilen vermischt. Bevorzugte Rezepturen für Putze enthalten 0.2 bis 0.6 Gew.-% des pulverförmigen Konzentrats und 5 bis 15 Gew.-% polymere Bindemittel, bezogen auf das Gesamtgewicht des Putzes.

Die erfindungsgemäßen Beschichtungsmassen eignen sich zum Verputzen von Fassaden, insbesondere zum Verputzen von Wärmedämmverbundsystemen. In dieser Anwendung können die erfindungsgemäßen Beschichtungsmassen sowohl als Unterputz, als auch als Deckputz eingesetzt werden. Die Beschichtungsmassen eignen sich dabei sowohl für den Einsatz in dünnschichtigen (Korngröße < 100µm), als auch für den Einsatz in dickschichtigen Systemen (Korngröße bis 1500 µm, DIN EN 13300, 1062-1).

Besonders vorteilhaft sind Ausführungsformen bei denen die Fällungsmittel in Form von pulverförmigen Konzentraten eingesetzt werden. Bei der Verwendung eines pulverförmigen Konzentrates von organischem Fällungsmittel, insbesondere Polyethylenimin auf anorganischem oder organischem Träger, erhält man mit einem einfachen System, ohne Zusatz von anorganischem Fällungsmittel und Base, eine deutliche Beschleunigung der Abbindung, ohne daß es zu einer durch die Base induzierten Geruchsbelästigung kommt.

Die nachfolgenden Beispiele dienen zur weiteren Erläuterung der Erfindung:

### Rezeptur Beschichtungsmasse:

| (Kratzputzstruktur 2.5 mm Körnung) | | |
|---|---|---|
| 7.9 | Gew.-Teile | Wasser |
| 2.0 | Gew.-Teile | Konservierungsmittel |
| 2.0 | Gew.-Teile | Polyacrylatdispergiermittel(40 %-ig) |
| 15.0 | Gew.-Teile | Anorganisches Schichtsilikat (5 %-ig) |
| 30.0 | Gew.-Teile | Celluloseverdicker (2 %-ig) |
| 1.0 | Gew.-Teile | Polyacrylatverdicker |
| 5.0 | Gew.-Teile | Lusolvan FBH (Verfilmungshilfsmittel) |
| 5.0 | Gew.-Teile | Cellulosefaser |
| 1.0 | Gew.-Teile | Faserfüllstoff Polyethylenfibrid |
| 30.0 | Gew.-Teile | Titandioxid |
| 184.1 | Gew.-Teile | Polymerisat (51 %-ige wäßrige Dispersion)* |
| 225.0 | Gew.-Teile | Calcit (mittlere Teilchengröße 50 µm) |
| 170.0 | Gew.-Teile | Calcit (mittlere Teilchengröße 130 µm) 5.0 |
| 320.0 | Gew.-Teile | Marmorsand (Körnung 1.8-2.5 mm) |
| 2.0 | Gew.-Teile | Entschäumer |
| 1000.0 | Gew.-Teile | Summe |

| | | |
|---|---|---|
| * = 51 %-ige wäßrige Dispersion auf der Basis eines Vinyl-acetat/Ethylen-Copolymerisats, Vinnapas® LL 3800W, der Wacker Polymer Systems. | | |

### Vergleichsbeispiel 1:

### (Beschichtungsmasse ohne Zusatz von Fällungsmittel)

Es wurde eine Beschichtungsmasse der oben aufgeführten Rezeptur, welche nur polymeres Bindemittel enthält, unverändert eingesetzt.

### Vergleichsbeispiel 2:

### (Beschichtungsmasse mit anorganischem Fällungsmittel)

Zur oben genannten Rezeptur wurden zusätzlich 0.3 Gew.-% (3 Gew.-Teile) ammoniakalisches Zinkacetat (50 %-ige wäßrige Lösung) zugesetzt.

### Beispiel 3:

### (Beschichtungsmasse mit Zusatz von organischem Fällungsmittel)

Zur oben genannten Rezeptur wurden zusätzlich 0.3 Gew.-% (3 Gew.-Teile) Polyethylenimin-Lösung (Polymin P, 50 %-ige wäßrige Lösung, Mw = 7.5·10⁵, Firma BASF) zugesetzt.

### Beispiel 4:

### (Beschichtungsmasse mit Zusatz von anorganischem und organischem Fällungsmittel)

Zur oben genannten Rezeptur wurden zusätzlich 0.3 Gew.-% (3 Gew.-Teile) Polyethylenimin-Lösung (Polymin P, 50 %-ige wäßrige Lösung, Mw = 7.5·10⁵, Firma BASF) und 0.3 Gew.-% (3 Gew.-Teile) ammoniakalisches Zinkacetat (50 %-ige wäßrige Lösung) zugesetzt.

### Beispiel 5:

### (Beschichtungsmasse mit Zusatz von organischem Fällungsmittel)

Es wurde analog Beispiel 3 vorgegangen, mit dem Unterschied, daß anstelle des dort genannten Polymerisats die entsprechende Menge einer 60 %-igen wäßrigen Dispersion eines Vinylchlorid-Ethylen-Vinyllaurat-Mischpolymerisats (Vinnapas® CEF 52W der Wacker Polymer Systems) eingesetzt wurde.

### Beispiel 6:

### (Beschichtungsmasse mit Zusatz von anorganischem und organischem Fällungsmittel)

Es wurde analog Beispiel 4 vorgegangen, mit dem Unterschied, daß anstelle des dort genannten Polymerisats die entsprechende Menge einer 50 %-igen wäßrigen Dispersion eines Vinylchlorid-Ethylen-Vinylacetat--Mischpolymerisats (Vinnapas® CEF 10W der Wacker Polymer Systems) eingesetzt wurde.

### Vergleichsbeispiel 7:

### (Beschichtungsmasse ohne Zusatz von Fällungsmittel)

Es wurde analog Vergleichsbeispiel 1 vorgegangen, mit dem Unterschied, daß anstelle des dort genannten Polymerisats die entsprechende Menge einer 51 %-igen wäßrigen Dispersion eines Vinylchlorid/Ethylen/Acrylat-Mischpolymerisats (Vinnapas® CEF 50W der Wacker Polymer Systems) eingesetzt wurde.

### Vergleichsbeispiel 8:

### (Beschichtungsmasse mit anorganischem Fällungsmittel)

Es wurde analog Vergleichsbeispiel 2 vorgegangen, mit dem Unterschied, daß anstelle des dort genannten Polymerisats die entsprechende Menge einer 51 %-igen wäßrigen Dispersion eines Vinylchlorid/Ethylen/Acrylat-Mischpolymerisats (Vinnapas® CEF 50W der Wacker Polymer Systems) eingesetzt wurde.

### Beispiel 9:

### (Beschichtungsmasse mit Zusatz von organischem Fällungsmittel)

Es wurde analog Beispiel 3 vorgegangen, mit dem Unterschied, daß anstelle des dort genannten Polymerisats die entsprechende Menge einer 51 %-igen wäßrigen Dispersion eines Vinylchlorid/Ethylen/Acrylat-Mischpolymerisats (Vinnapas® CEF 50W der Wacker Polymer Systems) eingesetzt wurde.

### Beispiel 10:

### (Beschichtungsmasse mit Zusatz von anorganischem und organischem Fällungsmittel)

Es wurde analog Beispiel 4 vorgegangen, mit dem Unterschied, daß anstelle des dort genannten Polymerisats die entsprechende Menge einer 51 %-igen wäßrigen Dispersion eines Vinylchlorid/Ethylen/Acrylat-Mischpolymerisats (Vinnapas® CEF 50W der Wacker Polymer Systems) eingesetzt wurde.

### Beispiel 11:

### (Beschichtungsmasse mit Zusatz von organischem Fällungsmittel)

Es wurde analog Beispiel 3 vorgegangen, mit dem Unterschied, daß anstelle des dort genannten Polymerisats die entsprechende Menge einer 50 %-igen wäßrigen Dispersion eines Vinylacetat-Ethylen-VeoVa10-Mischpolymerisats (Vinnapas® LL3523W der Wacker Polymer Systems) eingesetzt wurde.

### Beispiel 12:

### (Beschichtungsmasse mit Zusatz von organischem Fällungsmittel)

Es wurde analog Beispiel 3 vorgegangen, mit dem Unterschied, daß anstelle der dort genannten Dispersion die entsprechende Menge einer 50 %-igen wäßrigen Redispersion eines Redispersionspulvers auf der Basis eines Vinylacetat-Ethylen-Mischpolymerisats (Vinnapas® HH/B 953 der Wacker Polymer Systems) eingesetzt wurde.

### Beispiel 13:

### (Beschichtungsmasse mit Zusatz von organischem Fällungsmittel)

Es wurde analog Beispiel 3 vorgegangen, mit dem Unterschied, daß anstelle der dort genannten Dispersion die entsprechende Menge einer 50 %-igen wäßrigen Redispersion eines Redispersionspulvers auf der Basis eines Vinylchlorid-Ethylen-Vinyllaurat-Mischpolymerisats eingesetzt wurde.

### Beispiel 14:

### (Beschichtungsmasse mit Zusatz von organischem Fällungsmittel auf anorganischem Träger)

Es wurde analog Beispiel 3 vorgegangen, mit dem Unterschied, daß anstelle von 0.3 Gew.-% Polyethylenimin-Lösung 0.3 Gew.-% eines Polyethylenimin-Pulverkonzentrats eingesetzt wurden. Zur Herstellung des Pulverkonzentrats wurden in 70 Gew.-Teilen Polyethylenimin 30 Gew.-Teile eines hochdispersen Kieselsäurepulvers (HDK V15 der Wacker-Chemie) suspendiert und die Suspension getrocknet.

### Beispiel 15

### (Beschichtungsmasse mit Zusatz von organischem Fällungsmittel auf organischem Träger)

Es wurde analog Beispiel 13 vorgegangen, mit dem Unterschied, daß 7 Gew.-Teile einer 50 %-igen wäßrigen Polyethylenimin-Lösung mit 93 Gew.-Teilen einer 10 %-igen Polyvinylalkohol-Lösung (Hydrolysegrad 71 Mol-%, Höppler-Viskosität 4.5 mPas) vermischt wurden und das Gemisch anschließend sprühgetrocknet wurde.

### Anwendungstechnische Prüfung der Trocknung:

### Herstellung der Probekörper:

Die gemäß den Vergleichsbeispielen und Beispielen erhaltenen Beschichtungsmassen wurden mit einer Traufel in einer Schichtdicke von 2.5 mm auf eine Platte aufgetragen. Beschichtungsmasse, Substrat und Arbeitsgeräte waren auf +6 °C vorgekühlt. Unmittelbar nach der Applikation wurden die beschichteten Probeplatten entsprechend der angegebenen Trocknungsbedingungen im Klimaschrank (Weiß Umwelttechnik) gelagert.

### Trocknungsbedingung A:

Lagerung für 6 Stunden bei +6°C und 95 % Luftfeuchtigkeit; die Luftgeschwindigkeit an der Beschichtungsoberfläche betrug 0 m/s.

### Trocknungsbedingung Zyklus B:

Trocknungszyklus (Gesamtzeit 29 h) bestehend aus 4 h Lagerung bei +6°C, 3h Abkühlung von +6°C auf -5°C, 10h Lagerung bei-5°C, 3 h Erwärmung von -5°C auf +6°C, 9 h Lagerung bei +6°C).

### Trocknungsbedingung Zyklus C:

Trocknungszyklus (Gesamtzeit 24 h) bestehend aus 4 h Lagerung bei +6°C, 3 h Abkühlung von +6°C auf -5°C, 10 h Lagerung bei-5°C, 3 h Erwärmung von -5°C auf +6°C, 4 h Lagerung bei +6°C).

### Trocknungsbedingung Zyklus D:

Trocknungszyklus (Gesamtzeit 16 h) bestehend aus 4 h Lagerung bei +6°C, 1 h Abkühlung von +6°C auf -5°C, 6 h Lagerung bei-5°C, 1 h Erwärmung von -5°C auf +6°C, 4 h Lagerung bei +6°C).

Anschließend wurde mit einem Brausestrahl (definierter Wasserdruck) die Putzschicht solange besprüht bis sich erste Putzablösungen zeigten. Je später die ersten Putzablösungen auftreten umso verfestigter ist das System bereits an der Oberfläche, das heißt umso früher könnte es bereits weiterverarbeitet werden.
Maßzahl für die Messung war die Zeit bis zum Beginn der Putzablösung. Pro (Vergleichs)beispiel wurden jeweils 2 Messungen durchgeführt. Die Ergebnisse sind in den Tabellen 1 bis 3 zusammengefaßt.

Die Ergebnisse zeigen, daß organisches Fällungsmittel alleine die Austrocknung des Putzes bei niederen Temperaturen deutlich beschleunigt. Mit anorganischem Fällungsmittel alleine wird nur geringfügige Beschleunigung erreicht. Die Kombination von anorganischem und organischem Fällungsmittel hingegen führt zu einer drastischen Beschleunigung der Austrocknung, mit dem Effekt, daß das erfindungsgemäße Beschichtungssystem der Belastung durch den Wasserstrahl deutlich länger Stand hält als die Beschichtungen der Vergleichsbeispiele.

**Tabelle 1:**

| Trocknungsbedingung A | | |
|---|---|---|
| Beispiel | t₁ [min] | t₂ [min] |
| Vergl.-bsp. 1 | 0 | 0 |
| Vergl.-bsp. 2 | < 1 | < 1 |
| Beispiel 3 | 1.0 | 1.5 |
| Beispiel 4 | 1.5 | 4.0 |
| Beispiel 14 | 2.0 | 3.0 |

**Tabelle 2:**

| Trocknungsbedingung A | | |
|---|---|---|
| Beispiel | t₁ [min] | t₂ [min] |
| Beispiel 5 | 1.0 | 1.0 |
| Beispiel 6 | 4.0 | 1.0 |
| Vergl.-bsp. 7 | 0 | 0 |
| Vergl.-bsp. 8 | < 1 | < 1 |
| Beispiel 9 | 4.0 | 1.5 |
| Beispiel 10 | 4.0 | 2.0 |

**Tabelle 3:**

| Trocknungsbedingungen Zyklen B, C und D | | | |
|---|---|---|---|
| Beispiel | Zyklus B | Zyklus C | Zyklus D |
| | T_{B} [min] | T_{C} [min] | T_{D} [min] |
| Vergl.-bsp. 1 | < 1 | < 1 | < 1 |
| Vergl.-bsp. 2 | 8 | 3 | < 1 |
| Beispiel 3 | 8 | 4 | 1 |
| Beispiel 4 | > 10 | > 10 | 8 |
| Beispiel 14 | 7-8 | | |

## Patentansprüche

1. Schnell trocknende Putz- und Beschichtungsmasse ohne UV-Absorber enthaltend ein Bindemittel in Form einer wäßrigen Polymerdispersion oder eines in Wasser redispergierbaren Polymerpulvers, jeweils mit homogen aufgebauten Polymerpartikeln, sowie 0.01 bis 1 Gew.-%, bezogen auf das Gesamtgewicht der Beschichtungsmasse, eines organisches Fällungsmittel aus der Gruppe der Polyethylenimine, oder der niedermolekularen Di-, Trioder Tetraamine mit einem Molekulargewicht < 200, gegebenenfalls in Kombination mit einem anorganischen Fällungsmittel.

2. Schnell trocknende Putz- und Beschichtungsmasse nach Anspruch 1, **dadurch gekennzeichnet, daß** als Polymere solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide, in einer Menge von 5 bis 15 Gew.-% Polymeranteil bezogen auf Beschichtungsmasse, enthalten sind.

3. Schnell trocknende Putz- und Beschichtungsmasse nach Anspruch 1 bis 2, **dadurch gekennzeichnet, daß** die Polymere noch 0.1 bis 8 Gew.-%, bezogen auf das Gesamtgewicht des Polymer, von einem oder mehreren ethylenisch ungesättigten, carboxylgruppenhaltigen Monomeren enthalten.

4. Schnell trocknende Putz- und Beschichtungsmasse nach Anspruch 3, **dadurch gekennzeichnet, daß** als organisches Fällungsmittel ein Polymeres aus der Gruppe der Polyethylenimine mit einem mittleren Molekulargewicht Mw von 1·10⁵ bis 2·10⁶ enthalten ist.

5. Schnell trocknende Putz- und Beschichtungsmasse nach Anspruch 1 bis 4, **dadurch gekennzeichnet, daß** als anorganisches Fällungsmittel ein Metallsalz von Metallen der 2. und 3. Hauptgruppe und der 2. und 4. Nebengruppe des PSE eingesetzt wird.

6. Schnell trocknende Putz- und Beschichtungsmasse nach Anspruch 1 bis 4, **dadurch gekennzeichnet, daß** als anorganisches Fällungsmittel ein Metallsalz aus der Gruppe der Halogenide, Carbonate, Sulfate, Phosphate und Acetate von Al³⁺, Ti⁴⁺, Zr²⁺ und Zn²⁺ eingesetzt wird.

7. Schnell trocknende Putz- und Beschichtungsmasse nach Anspruch 1 bis 4, **dadurch gekennzeichnet, daß** das organische Fällungsmittel und gegebenenfalls das anorganische Fällungsmittel auf Trägermaterialien aus der Gruppe der anorganischen und organischen Feststoffe mit einer mittleren Teilchengröße von 5 nm bis 100 µm aufgetragen sind.

8. Verfahren zur Herstellung von Putz- und Beschichtungsmassen gemäß Anspruch 1 bis 7, wobei das polymere Bindemittel in Form dessen wäßrigen Dispersion oder Dispersionspulver und das Fällungsmittel zusammen mit den weiteren Rezepturbestandteilen abgemischt werden.

9. Verfahren nach Anspruch 8, wobei zur Herstellung von Putz- und Beschichtungsmassen das Fällungsmittel in Form eines wäßrigen oder pulverförmigen Konzentrats zugesetzt wird.

10. Verfahren nach Anspruch 9, wobei zur Herstellung von pastösen Putz- und Beschichtungsmassen das Fällungsmittel in Form eines wäßrigen Konzentrats mit 30 bis 60 Gew.-% organischem Fällungsmittel, 10 bis 40 Gew.-% wäßrige Ammoniaklösung und 0 bis 60 Gew.-% anorganischem Fällungsmittel zugegeben wird.

11. Verfahren nach Anspruch 9, wobei zur Herstellung von zementfreien Trockenputzen oder pulverförmigen Kunstharzputzen das polymere Bindemittel in Form eines in Wasser redispergierbaren Dispersionspulvers und das Fällungsmittel auf einem pulverförmigen Trägermaterial aufgetragen zugemischt werden.

12. Verfahren nach Anspruch 9 und 11, wobei das organische und gegebenenfalls das anorganische Fällungsmittel auf einem Trägermaterial aus der Gruppe der Kieselgele und Kieselsäuren sowie der Polyvinylalkohole mit einem Hydrolysegrad von 65 bis 95 Mol-% und einer Höppler-Viskosität von 2 bis 15 mPas aufgetragen sind.

13. Verwendung der schnell trocknenden Putz- und Beschichtungsmasse nach Anspruch 1 bis 12 zum Verputzen von Fassaden.

14. Verwendung der schnell trocknenden Putz- und Beschichtungsmasse nach Anspruch 1 bis 12 zum Verputzen von Wärmedämmverbundsystemen.

15. Verwendung eines Fällungsmittel-Konzentrats zur Herstellung von schnell trocknenden Putz- und Beschichtungsmassen in Pulverform oder in wäßriger Form, enthaltend 10 bis 90 Gew.-% organisches Fällungsmittel aus der Gruppe der Polyethylenimine, oder der niedermolekularen Di-, Tri- oder Tetraamine mit einem Molekulargewicht < 200, und 0 bis 60 Gew.-% anorganisches Fällungsmittel, jeweils bezogen auf das Gesamtgewicht des Konzentrats.

16. Verwendung eines Fällungsmittel-Konzentrats gemäß Anspruch 15 enthaltend 30 bis 60 Gew.-% organisches Fällungsmittel, 10 bis 40 Gew.-% wäßrige Ammoniaklösung und 0 bis 60 Gew.-% anorganisches Fällungsmittel, jeweils bezogen auf das Gesamtgewicht des Konzentrats.

17. Verwendung eines Fällungsmittel-Konzentrats gemäß Anspruch 15 enthaltend organisches und gegebenenfalls anorganisches Fällungsmittel auf pulverförmigen anorganischen oder organischen Feststoffen mit einer mittleren Teilchengröße von 5 nm bis 100 µm.

18. Verwendung eines Fällungsmittel-Konzentrats gemäß Anspruch 15 bis 17, welches als organisches Fällungsmittel ein Polymeres aus der Gruppe der Polyethylenimine mit einem mittleren Molekulargewicht Mw von 1·10⁵ bis 2·10⁶ enthält.

19. Verwendung eines Fällungsmittel-Konzentrats gemäß Anspruch 17 und 18, welches ein Trägermaterial aus der Gruppe der Kieselgele, Kieselsäuren sowie Polyvinylalkohol-Pulver enthält.

20. Verwendung eines Fällungsmittel-Konzentrats gemäß Anspruch 19, welches ein Trägermaterial aus der Gruppe der Polyvinylalkohole mit einem Hydrolysegrad von 65 bis 95 Mol-% und einer Höppler-Viskosität von 2 bis 15 mPas enthält.

21. Verwendung eines Fällungsmittel-Konzentrats gemäß Anspruch 19, welches ein Trägermaterial aus der Gruppe der hochdispersen Kieselsäuren mit einer BET-Oberfläche von 100 bis 400 m²/g enthält.

## Claims

1. Fast-drying rendering and coating composition without UV absorbers comprising a binder in the form of an aqueous polymer dispersion or of a water-redispersible polymer powder in each case having homogenously structured polymer particles, and also from 0.01 to 1% by weight, based on the total weight of the coating composition, of an organic precipitant selected from the group consisting of the polyethyleneimines and of the low-molecular-weight bi-, tri- or tetramines with molecular weight < 200, if desired in combination with an inorganic precipitant.

2. Fast-drying rendering and coating composition according to Claim 1, **characterized in that** the polymers present comprise polymers based on one or more monomers selected from the group including vinyl esters of unbranched or branched alkylcarboxylic acids having from 1 to 15 carbon atoms, methacrylates and acrylates of alcohols having from 1 to 10 carbon atoms, vinyl aromatics, olefins, dienes and vinyl halides, in amounts of from 5 to 15% by weight of polymer, based on the coating composition.

3. Fast-drying rendering and coating composition according to Claim 1 or 2, **characterized in that** the polymers also contain from 0.1 to 8% by weight, based on the total weight of the polymer, of one or more ethylenically unsaturated carboxyl-containing monomers.

4. Fast-drying rendering and coating composition according to Claim 3, **characterized in that** the organic precipitant present comprises a polymer selected from the group consisting of the polyethyleneimines with an average molecular weight Mw of from 1·10⁵ to 2·10⁶.

5. Fast-drying rendering and coating composition according to Claims 1 to 4, **characterized in that** the inorganic precipitant present comprises a metal salt of metals of the second or third main group or of the second or fourth transition group of the Periodic Table.

6. Fast-drying rendering and coating composition according to Claims 1 to 4, **characterized in that** the inorganic precipitant present comprises a metal salt selected from the group consisting of the halides, carbonates, sulphates, phosphates and acetates of Al³⁺, Ti⁴⁺, Zr²⁺ and Zn²⁺.

7. Fast-drying rendering and 'coating composition according to Claims 1 to 4, **characterized in that** the organic precipitant and, as appropriate, the inorganic precipitant have been applied to carrier materials selected from the group consisting of inorganic and organic solids with an average particle size of from 5 nm to 100 µm.

8. Process for preparing rendering and coating compositions according to Claims 1 to 7, where the polymeric binder in the form of its aqueous dispersion or dispersion powder and the precipitant are blended with the other constituents of the mix.

9. Process according to Claim 8, where, to prepare rendering and coating compositions, the precipitant is added in the form of an aqueous or pulverulent concentrate.

10. Process according to Claim 9, where, to prepare paste-like renders and coating compositions, the precipitant is added in the form of an aqueous concentrate with from 30 to 60% by weight of organic precipitant, from 10 to 40% by weight of aqueous ammonia solution and from 0 to 60% by weight of inorganic precipitant.

11. Process according to Claim 9, where, to prepare cement-free dry renders or pulverulent synthetic resin renders, the polymeric binder, in the form of a water-redispersible dispersion powder, and the precipitant are admixed after being applied to a pulverulent carrier material.

12. Process according to Claim 9 or 11, where the organic precipitant and, as appropriate, the inorganic precipitant have been applied to a carrier material selected from the group consisting of silica gels and silicas, and also polyvinyl alcohols with a degree of hydrolysis of from 65 to 95 mol% and with a Höppler viscosity of from 2 to 15 mPas.

13. Use of the fast-drying rendering and coating composition according to Claims 1 to 12 for rendering the exteriors of buildings.

14. Use of the fast-drying rendering and coating composition according to Claims 1 to 12 for rendering composite heat-insulation systems.

15. Use of a precipitant concentrate for preparing fast-drying rendering and coating compositions in powder form or in aqueous form, comprising from 10 to 90% by weight of organic precipitant selected from the group consisting of the polyethyleneimines and of the low-molecular-weight bi-, tri- or tetramines with molecular weight < 200 and from 0 to 60% by weight of inorganic precipitant, based in each case on the total weight of the concentrate.

16. Use of a precipitant concentrate according to Claim 15 comprising from 30 to 60% by weight of organic precipitant, from 10 to 40% by weight of aqueous ammonia solution and from 0 to 60% by weight of inorganic precipitant, based in each case on the total weight of the concentrate.

17. Use of a precipitant concentrate according to Claim 15, comprising organic and, as appropriate, inorganic precipitant on pulverulent inorganic or organic solids with an average particle size of from 5 nm to 100 µm.

18. Use of a precipitant concentrate according to Claims 15 to 17, in which the organic precipitant present is a polymer selected from the group consisting of the polyethyleneimines with an average molecular weight Mw of from 1·10⁵ to 2·10⁶.

19. Use of a precipitant concentrate according to Claim 17 or 18, which comprises a carrier material selected from the group consisting of the silica gels, silicas, and also polyvinyl alcohol powders.

20. Use of a precipitant concentrate according to Claim 19, which comprises a carrier material selected from the group consisting of the polyvinyl alcohols with a degree of hydrolysis of from 65 to 95 mol% and a Höppler viscosity of from 2 to 15 mPas.

21. Use of a precipitant concentrate according to Claim 19, which comprises a carrier material selected from the group consisting of fine-particle silicas with a BET surface area of from 100 to 400 m²/g.

## Revendications

1. Matière d'enduit et de revêtement séchant rapidement, sans absorbeur UV, contenant un liant sous forme d'une dispersion aqueuse de polymère ou d'une poudre de polymère redispersable dans l'eau, comportant chacune des particules de polymère de composition homogène, ainsi que 0,01 à 1 % en poids, par rapport au poids total de la matière de revêtement, d'un agent de précipitation organique choisi dans le groupe des polyéthylène-imines ou des di-, tri- ou tétra-amines de faible masse moléculaire, ayant une masse moléculaire < 200, éventuellement en association avec un agent de précipitation minéral.

2. Matière d'enduit et de revêtement séchant rapidement selon la revendication 1, **caractérisée en ce qu'**elle contient en tant que polymères ceux à base d'un ou plusieurs monomères choisis dans le groupe comprenant des esters vinyliques d'acides alkylcarboxyliques ramifiés ou non ramifiés, ayant de 1 à 15 atomes de carbone, des esters d'acide méthacrylique et des esters d'acide acrylique avec des alcools ayant de 1 à 10 atomes de carbone, des composés vinylaromatiques, des oléfines, des diènes et des halogénures de vinyle, en une quantité de 5 à 15 % en poids de fraction polymère par rapport à la matière de revêtement.

3. Matière d'enduit et de revêtement séchant rapidement selon les revendications 1 à 2, **caractérisée en ce que** les polymères contiennent encore de 0,1 à 8 % en poids, par rapport au poids total du polymère, d'un ou plusieurs monomères à insaturation éthylénique, contenant des groupes carboxy.

4. Matière d'enduit et de revêtement séchant rapidement selon la revendication 3, **caractérisée en ce qu'**elle contient en tant qu'agent de précipitation organique un polymère choisi dans le groupe des polyéthylène-imines ayant une masse moléculaire moyenne Mw de 1.10⁵ à 2.10⁶.

5. Matière d'enduit et de revêtement séchant rapidement selon les revendications 1 à 4, **caractérisée en ce qu'**on utilise comme agent de précipitation minéral un sel métallique de métaux des groupes IIA et IIIA et des groupes IIB et IVB du système périodique des éléments.

6. Matière d'enduit et de revêtement séchant rapidement selon les revendications 1 à 4, **caractérisée en ce qu'**on utilise comme agent de précipitation minéral un sel métallique choisi dans le groupe des halogénures, carbonates, sulfates, phosphates et acétates de Al³⁺, Ti⁴⁺, Zr²⁺ et Zn²⁺.

7. Matière d'enduit et de revêtement séchant rapidement selon les revendications 1 à 4, **caractérisée en ce que** l'agent de précipitation organique et éventuellement l'agent de précipitation minéral sont appliqués sur des matériaux de support choisis dans le groupe des matières solides organiques et des matières solides minérales, ayant une taille moyenne de particule de 5 nm à 100 µm.

8. Procédé pour la fabrication de matières d'enduit et de revêtement selon les revendications 1 à 7, dans lequel le liant polymère, sous forme de sa dispersion aqueuse ou poudre en dispersion, et l'agent de précipitation sont mélangés ensemble avec les autres composants de la formule.

9. Procédé selon la revendication 8, dans lequel, pour la fabrication des matières d'enduit et de revêtement, l'agent de précipitation est ajouté sous forme d'un concentré aqueux ou pulvérulent.

10. Procédé selon la revendication 9, dans lequel, pour la fabrication de matières pâteuses d'enduit et de revêtement, on ajoute l'agent de précipitation sous forme d'un concentré aqueux comportant 30 à 60 % en poids d'agent de précipitation organique, 10 à 40 % en poids de solution aqueuse d'ammoniaque et 0 à 60 % en poids d'agent de précipitation minéral.

11. Procédé selon la revendication 9, dans lequel, pour la fabrication d'enduits secs sans ciment ou d'enduits pulvérulents à base de résines synthétiques, on mélange le liant polymère sous forme d'une poudre pour dispersion redispersable dans l'eau et l'agent de précipitation appliqué sur un matériau de support pulvérulent.

12. Procédé selon les revendications 9 et 11, dans lequel l'agent de précipitation organique et éventuellement l'agent de précipitation minéral sont appliqués sur un matériau de support choisi dans le groupe des gels de silice et des acides siliciques ainsi que des poly(alcool vinylique)s ayant un degré d'hydrolyse de 65 à 95 % en moles et une viscosité Höppler de 2 à 15 mPa.s.

13. Utilisation de la matière d'enduit et de revêtement séchant rapidement selon les revendications 1 à 12, pour l'exécution d'enduits sur des façades.

14. Utilisation de la matière d'enduit et de revêtement séchant rapidement selon les revendications 1 à 12, pour l'exécution d'enduits sur des systèmes composites d'isolation thermique.

15. Utilisation d'un concentré d'agent de précipitation pour la fabrication de matières d'enduit et de revêtement séchant rapidement sous forme de poudre ou sous forme aqueuse, contenant de 10 à 90 % en poids d'un agent de précipitation organique choisi dans le groupe des polyéthylène-imines ou des di-, tri- ou tétra-amines de faible masse moléculaire ayant une masse moléculaire < 200, et de 0 à 60 % en poids d'un agent de précipitation minéral, dans chaque cas par rapport au poids total du concentré.

16. Utilisation d'un concentré d'agent de précipitation selon la revendication 15, contenant de 30 à 60 % en poids d'un agent de précipitation organique, de 10 à 40 % en poids d'une solution aqueuse d'ammoniaque et de 0 à 60 % en poids d'un agent de précipitation minéral, chaque fois par rapport au poids total du concentré.

17. Utilisation d'un concentré d'agent de précipitation selon la revendication 15, contenant un agent de précipitation organique et éventuellement un agent de précipitation minéral, sur des matières solides organiques ou minérales pulvérulentes ayant une taille moyenne de particule de 5 nm à 100 µm.

18. Utilisation d'un concentré d'agent de précipitation selon les revendications 15 à 17, qui contient en tant qu'agent de précipitation organique un polymère choisi dans le groupe des polyéthylène-imines ayant une masse moléculaire moyenne Mw de 1.10⁵ à 2.10⁶.

19. Utilisation d'un concentré d'agent de précipitation selon les revendications 17 et 18, qui contient un matériau de support choisi dans le groupe des gels de silice, des acides siliciques ainsi que de la poudre de poly(alcool vinylique).

20. Utilisation d'un concentré d'agent de précipitation selon la revendication 19, qui contient un matériau de support choisi dans le groupe des poly(alcool vinylique)s ayant un degré d'hydrolyse de 65 à 95 % en moles et une viscosité Höppler de 2 à 15 mPa.s.

21. Utilisation d'un concentré d'agent de précipitation selon la revendication 19, qui contient un matériau de support choisi dans le groupe des acides siliciques hautement dispersés ayant une surface BET de 100 à 400 m²/g.
